# EUROPÄISCHE PATENTSCHRIFT

(11) **EP 2 714 474 B1**
(45) Veröffentlichungstag und Bekanntmachung des Hinweises auf die Patenterteilung: **06.05.2015**
(21) Anmeldenummer: 12720420.4
(22) Anmeldetag: 08.05.2012
(51) Int. Cl.: B60R 21/01

(54) **VERFAHREN ZUM STEUERN VON RÜCKHALTEEINRICHTUNGEN EINES KRAFTFAHRZEUGS**
METHOD FOR CONTROLLING RESTRAINT DEVICES OF A MOTOR VEHICLE
PROCÉDÉ DE COMMANDE DE DISPOSITIFS DE RETENUE D'UN VÉHICULE

(30) Priorität: 23.05.2011 DE 102011102298
(43) Veröffentlichungstag der Anmeldung: 09.04.2014
(73) Patentinhaber: Audi AG, 85045 Ingolstadt (DE)
(72) Erfinder: FÜRST, Franz, 85114 Buxheim (DE); LARICE, Markus, 85123 Karlskron (DE); DIRNDORFER, Tobias, 80799 München (DE)
(74) Vertreter: Thielmann, Frank
(86) Internationale Anmeldenummer: PCT/EP2012/001963
(87) Internationale Veröffentlichungsnummer: WO 2012/159707

(56) Entgegenhaltungen:
- EP-A1- 1 356 998
- EP-A2- 1 031 474
- WO-A1-02/092396
- WO-A1-2005/035319
- DE-A1- 10 107 272
- DE-A1-102004 037 016
- DE-A1-102007 015 768
- DE-A1-102008 063 111
- DE-T2-602004 006 119
- GB-A- 2 371 780
- GB-A- 2 416 896

## Beschreibung

Die vorliegende Erfindung betrifft ein Verfahren zum Steuern von Rückhalteeinrichtungen eines Kraftfahrzeugs. Des Weiteren betrifft die vorliegende Erfindung ein Rückhaltesystem für ein Kraftfahrzeug. Schließlich betrifft die vorliegende Erfindung ein solches Kraftfahrzeug.

Bei heutigen Algorithmen für Rückhaltesysteme in Kraftfahrzeugen ist das Auslösen der Rückhaltesysteme an das Überschreiten von definierten Schwellwerten gekoppelt, die ein Maß für die Schwere des Unfalls sind. Diese Schwellwerte sind beispielsweise bei Frontalunfällen immer so festgelegt, dass ein pyrotechnischer Gurtstraffer immer zeitlicher früher bzw. maximal gleichzeitig mit einem Airbag ausgelöst wird. Dies hat zur Folge, dass bei Unfällen mit angeschnallten Insassen niemals ein Auslösen des Airbags ohne ein vorheriges Auslösen des Gurtstraffers möglich ist.

Des Weiteren erfolgt erst mit dem Auslösen des Airbags die Ansteuerung entsprechender Einrichtungen bzw. adaptiver Systemkomponenten. Solche adaptiven Systemkomponenten können beispielsweise ein schaltbarer Gurtkraftbegrenzer oder steuerbare Auslassöffnungen des Airbags, sogenannte Airbagvents, sein. Somit sind mit dem Auslösen des Airbags alle Auslöseentscheidungen getroffen und der weitere Verlauf eines Unfalls bzw. der Verlauf der Schwere des Unfalls geht nicht mehr in die Auslöseentscheidung ein. Zudem müssen die Auslöseentscheidungen, die beispielsweise anhand von gemessenen Verzögerungssignalen des Kraftfahrzeugs bestimmt werden, sehr früh getroffen werden, um die Rückhaltesysteme wie Gurt und Airbag frühzeitig an den Fahrzeuginsassen wirken zu lassen.

Die WO 2005/03 53 19 A1 beschreibt ein Kraftfahrzeug mit zumindest einem ersten Crashsensor, der in einer Sicherheitszone des Kraftfahrzeugs angeordnet ist und einem zweiten Crashsensor, der sich in einer Zone befindet, die während eines Unfalls beschädigt werden kann. Hierbei werden zur Be stimmung der Auslösesignale der Rückhaltesysteme die von den Crashsensoren ermittelten Bewegungsgrößen des Kraftfahrzeugs über verschiedene Zeitintervalle miteinander verglichen.

Die DE 60 2004 006 119 T2 beschreibt eine Sicherheitseinrichtung für ein Kraftfahrzeug, wobei ein Sicherheitsgurt und ein Airbag in Abhängigkeit von einem für das Gewicht des Sitzinsassen repräsentativen Ausgangssignal angesteuert werden. Dieses Ausgangssignal wird anhand der auf den Sicherheitsgurt wirkenden Kraft und der auf den Sitz einwirkenden Beschleunigung ermittelt.

Aus der DE 10 2008 063 111 A1 ist ein Verfahren zum Ansteuern eines Airbags bekannt, bei dem eine Entlüftungseinrichtung des Airbags in Abhängigkeit von der Position des Insassen auf dem Sitz angesteuert wird.

Die DE 101 07 272 A1 beschreibt ein Verfahren zur Steuerung von Fahrzeuginsassenrückhaltesystemen, die in Abhängigkeit von einem vorausermittelten Unfallschweregrad derart aktiviert werden, dass die auf den Insassen einwirkenden Rückhaltekräfte entsprechend dem ermittelten Unfallschweregrad eingestellt werden.

Aus der EP 1 031 474 A2 ist ein Rückhaltesystem für ein Kraftfahrzeug bekannt. Dabei wird in Abhängigkeit von der Schwere eines Unfalls zunächst ein Gurtstraffer ausgelöst. Danach kann ein Gurtkraftbegrenzer aktiviert werden. Anschließend können mehrere Airbags ausgelöst werden.

Des Weiteren beschreibt die GB 2 416 896 A eine Sicherheitsanordnung für ein Kraftfahrzeug. In Abhängigkeit von der Schwere eines Unfalls kann ein Gurtkraftbegrenzer und eine Airbagvent gesteuert werden.

Darüber hinaus beschreibt die EP 1 356 998 A1 ein Rückhaltesystem für ein Kraftfahrzeug, bei dem in Abhängigkeit von der Schwere eines Zusammenstoßes die Befüllmenge eines Airbags angepasst werden kann.

Zudem ist aus der GB 2 371 780 A eine Sicherheitsanordnung für ein Kraftfahrzeug bekannt, bei der in Abhängigkeit von der Schwere eines Zusammenstoßes eine von einem Gurtkraftbegrenzer bereitgestellt Kraft gesteuert werden kann.

Schließlich beschreibt die DE 10 2004 037 016 A1 ein Verfahren zur Steuerung von Kraftfahrzeuginsassen-Schutzsystemen. Dabei wird eine Unfallschwere vorhergesagt und aus der vorhergesagten Unfallschwere eine Entscheidung abgeleitet, ob bestimmte Kraftfahrzeuginsassen-Schutzsysteme ausgelöst werden sollen. Zudem kann ein Gurtkraftbegrenzer auf die Unfallschwere eingestellt werden. Bei Airbags können verschiedene Stufen gezündet werden oder das Aufblasverhalten in Abhängigkeit von der Unfallschwere gesteuert werden.

Die Aufgabe der vorliegenden Erfindung ist es, die Wirkung der Rückhaltesysteme in einem Kraftfahrzeug zum Schutze der Insassen zu verbessern.

Diese Aufgabe wird erfindungsgemäß gelöst durch ein Verfahren zum Steuern von Rückhalteeinrichtungen eines Kraftfahrzeugs durch
- Erfassen einer Bewegungsgröße des Kraftfahrzeugs,
- Auslösen einer ersten Rückhalteeinrichtung wahlweise in Abhängigkeit von dem Überschreiten eines ersten vorgegebenen Schwellwerts oder eines zweiten vorgegebenen Schwellwerts für die erfasste Bewegungsgröße,
- Auslösen einer zweiten Rückhalteeinrichtung wahlweise in Abhängigkeit von dem Überschreiten des ersten vorgegebenen Schwellwerts oder des zweiten vorgegebenen Schwellwerts für die erfasste Bewegungsgröße, und
- Ansteuern von einer die Rückhaltekraft der ersten Rückhalteeinrichtung beeinflussenden ersten Einrichtung und einer die Rückhaltekraft der zweiten Rückhalteeinrichtung beeinflussenden zweiten Einrichtung in Abhängigkeit von dem Überschreiten des ersten vorgegebenen Schwellwerts und/oder des zweiten vorgegebenen Schwellwerts, wobei
- die erste Rückhalteinrichtung einen Gurtstraffer und die zweite Rückhalteeinrichtung einen Airbag umfasst und wobei
- das Auslösen der Rückhalteeinrichtunge der ersten Rück nicht durch eine festgelegte Reihenfolge vorgegeben wird, sondern an dem Verlauf des Unfalls bzw. an die Schwere des Unfalls angepasst wird.

Mit dem erfindungsgemäßen Verfahren erfolgt das Ansteuern der jeweiligen Einrichtungen, die die Rückhaltekraft der jeweiligen Rückhalteeinrichtungen beeinflussen, nicht nur in Abhängigkeit von dem Überschreiten eines einzigen vorgegebenen Schwellwerts, der beispielsweise mit dem Auslösen eines Airbags gekoppelt ist. Das Auslösen der jeweiligen Einrichtungen erfolgt nun in Abhängigkeit von dem Überschreiten unterschiedlicher Schwellwerte, die mit dem Auslösen der entsprechenden Rückhalteeinrichtung gekoppelt sind. Das Ansteuern einer Einrichtung kann an das Auslösen der Rückhalteeinrichtung gekoppelt sein, die von der Einrichtung beeinflusst wird. Auf diese Weise kann einerseits das Auslösen der Rückhalteeinrichtungen und andererseits das Ansteuern der jeweiligen Einrichtungen in Abhängigkeit der erfassten Bewegungsgröße des Kraftfahrzeugs angepasst werden.

Eine solche Einrichtung zum Beeinflussen der Rückhaltekraft einer Rückhalteeinrichtung können beispielsweise steuerbare Ein- oder Auslassöffnungen an einem Airbag sein, die dazu dienen, die Befüllung des Airbags und somit seine Rückhaltewirkung nach dessen Auslösen zu steuern. Bewegungsgrößen können in diesem Zusammenhang die Geschwindigkeit des Kraftfahrzeugs, die Beschleunigung des Kraftfahrzeugs und die auf das Kraftfahrzeug wirkenden Quer- und Längsbeschleunigungen sein. Die Bewegungsgröße des Kraftfahrzeugs ist ein Maß für die Schwere des Unfalls, an das das Auslösen der Rückhalteeinrichtungen und der dazugehörigen Einrichtungen bzw. adaptiven Systemkomponenten durch das Verfahren besser angepasst werden kann.

In einer vorteilhaften Ausführungsform erfolgt das Ansteuern der ersten und/oder zweiten Einrichtung in Abhängigkeit von einer zeitlichen Dauer. Die zeitliche Dauer wird hierbei anhand eines zeitlichen Verlaufs der Bewegungsgröße bestimmt. Üblicherweise werden nach dem Auslösen einer Rückhalteeinrichtung eines Kraftfahrzeugs entsprechende Timer gestartet, nach deren Ablauf die Einrichtungen zur Beeinflussung der Rückhaltekraft der jeweiligen Rückhalteeinrichtung ausgelöst werden. Die zeitliche Dauer der Timer, nach dem die Einrichtungen angesteuert werden, wird nun nicht mehr durch einen fest vorgegebenen Wert bestimmt, sondern wird zudem an den zeitlichen Verlauf der Bewegungsgröße angepasst. Auf diese Weise kann das Auslösen der entsprechenden Einrichtung besonders gut an den zeitlichen Verlauf des Unfalls bzw. Crashs angepasst werden und somit kann zur Erhöhung der Sicherheit der Fahrzeuginsassen beigetragen werden.

In einer weiteren Ausführungsform der Erfindung erfolgt das Ansteuern der ersten und/oder zweiten Einrichtung ebenfalls in Abhängigkeit einer zeitlichen Dauer, wobei die zeitliche Dauer in diesem Fall in Abhängigkeit von dem Überschreiten eines weiteren vorgegebenen Schwellwerts für die Bewegungsgröße bestimmt wird. Ein Wert für die zeitliche Dauer der jeweiligen Timer, nach deren Ablauf die Einrichtungen angesteuert werden, kann auch in Abhängigkeit von dem Überschreiten eines weiteren Schwellwerts bestimmt werden. Somit kann die Dynamik des Unfallverlaufs bzw. die Schwere des Unfalls berücksichtigt werden. Hierbei ist es ebenso denkbar, dass mehrere Schwellwerte festgelegt werden, wobei in Abhängigkeit von dem Überschreiten der Schwellwerte eine Korrektur der zunächst festgelegten Timer erfolgen kann. Anhand der zeitlichen Entwicklung des Unfalls kann nun die im Voraus getroffene Annahmen eines Werts für die zeitliche Dauer der Timer entsprechend nach oben oder unten korrigiert werden. Die Auslösung erfolgt dann, wenn die jeweiligen Timer abgelaufen sind bzw. wenn die damit gekoppelten Schwellwerte überschritten werden.

Das Auslösen der zweiten Rückhalteeinrichtung erfolgt unabhängig von dem Auslösen der ersten Rückhalteeinrichtung. Hierbei ist das Auslösen der Rückhalteeinrichtungen nicht mehr durch eine festgelegte Reihenfolge vorgegeben, sondern kann an den Verlauf des Unfalls bzw. an die Schwere des Unfalls angepasst werden. Auf diese Weise wird eine unfalladaptive Auslöseentscheidung ermöglicht, welche den Fahrzeuginsassen, insbesondere bei Frontalzusammenstößen, einen besseren Schutz gewährleistet.

Des Weiteren wird erfindungsgemäß bereitgestellt ein Rückhaltesystem für ein Kraftfahrzeug mit
- zumindest einem ersten Crashsensor zum Erfassen einer Bewegungsgröße des Kraftfahrzeugs,
- einer ersten und einer zweiten Rückhalteeinrichtung,
- einer ersten Einrichtung, mit der eine Rückhaltekraft der ersten Rückhalteeinrichtung beeinflussbar ist,
- einer zweiten Einrichtung, mit der eine Rückhaltekraft der zweiten Rückhalteeinrichtung beeinflussbar ist, und
- einem Steuergerät zum Auslösen der ersten Rückhalteeinrichtung wahlweise in Abhängigkeit von dem Überschreiten eines ersten vorgegebenen Schwellwerts oder eines zweiten vorgegebenen Schwellwerts für die erfasste Bewegungsgröße, zum Auslösen einer zweiten Rückhalteeinrichtung wahlweise in Abhängigkeit von dem Überschreiten des ersten vorgegebenen Schwellwerts oder des zweiten vorgegebenen Schwellwerts für die erfasste Bewegungsgröße, und zum Ansteuern von der ersten und zweiten Einrichtung in Abhängigkeit von dem Überschreiten des ersten vorgegebenen Schwellwerts und/oder des zweiten vorgegebenen Schwellwerts, wobei
- die erste Rückhalteinrichtung einen Gurtstraffer und die zweite Rückhalteeinrichtung einen Airbag umfasst und wobei
- das Auslösen der Rückhalteeinrichtungen nicht durch eine festgelegte Reihanfolge vorgegeben wird, sondern an dem Verlauf des Unfalls bzw. an die Schwere des Unfalls angepasst wird.

Als Crashsensoren können Umfeldsensoren, wie kamerabasierte Sensoren, Radarsensoren, Lidarsensoren oder Körperschallsensoren verwendet werden. Ebenso können Geschwindigkeits-, Beschleunigungs- oder Druckssensoren genutzt werden, um eine Bewegungsgröße des Kraftfahrzeugs zu ermitteln. Zudem können mehrere der zuvor genannten Crashsensoren in Kombination miteinander verwendet werden.

Bevorzugt erfolgt das Ansteuern der ersten und/oder zweiten Einrichtung in Abhängigkeit einer zeitlichen Dauer. Hierbei wird die zeitliche Dauer entweder anhand des zeitlichen Verlaufs der Bewegungsgröße oder in Abhängigkeit von dem Überschreiten eines weiteren vorgegebenen Schwellwerts für die Bewegungsgröße bestimmt.

Die erste Rückhalteeinrichtung des Rückhaltesystems umfasst einen Gurtstraffer und die zweite Rückhalteeinrichtung umfasst einen Airbag. Vorteilhafterweise umfasst die erste Einrichtung des Rückhaltesystems einen Gurtkraftbegrenzer und die zweite Einrichtung eine oder mehrere steuerbare Auslassöffnungen des Airbags, so genanntes Airbagvents.

Die Wirkung des beschriebenen Rückhaltesystems zum Schutze der Insassen kann auf diese Weise, insbesondere bei Frontalunfällen, deutlich verbessert werden, da die Auslösung des Airbags nun unabhängig von der Auslösung des pyrotechnischen Gurtstraffers erfolgt. Des Weiteren können die Auslöseentscheidungen früher als bisher erfolgen, wodurch grundsätzlich die Rückhaltewirkung der Fahrzeuginsassen durch die Rückhaltesysteme früher erfolgen kann. Durch das adaptive Auslösen des schaltbaren Gurtkraftbegrenzers und des adaptiven Airbagvents kann die Rückhaltewirkung der Rückhaltesysteme Gurt und Airbag an die Schwere des Unfalls angepasst werden. Durch die Betrachtung eines größeren Zeitbereichs für den Unfallverlauf können die Auslöseentscheidungen sicherer getroffen werden. Dies gilt insbesondere für den Fall, bei dem sich der tatsächliche Verlauf des Unfalls zu einem späteren Zeitpunkt als schwerer herausstellt, als dies der zeitliche Verlauf der Schwere des Unfalls zu Beginn des Unfalls hätte vermuten lassen. Des Weiteren kann durch die adaptive Anpassung Auslöseentscheidungen die Rückhaltewirkung der Rückhalteeinrichtungen wie Gurt und Airbag nochmals verbessert werden.

Schließlich wird erfindungsgemäß bereitgestellt ein Kraftfahrzeug mit einem zuvor beschriebenen Rückhaltesystem.

Die vorliegende Erfindung wird nun anhand der beigefügten Zeichnungen näher erläutert. Diese zeigen in
- Fig. 1: ein Diagramm, in dem der zeitliche Verlauf einer Bewegungsgröße eines Kraftfahrzeugs dargestellt ist und in dem die Auslösezeitpunkte von Rückhalteeinrichtungen und den dazugehörigen Einrichtungen gemäß dem Stand der Technik dargestellt sind,
- Fig. 2: ein Ablaufdiagramm, das ein Verfahren zum Steuern von Rückhalteeinrichtungen eines Kraftfahrzeugs gemäß dem Stand der Technik zeigt,
- Fig. 3: ein Diagramm, in dem der zeitliche Verlauf einer Bewegungsgröße eines Kraftfahrzeugs dargestellt ist und die Auslösezeitpunkte von Rückhalteeinrichtungen und den dazugehörigen Einrichtungen dargestellt sind, und
- Fig. 4: ein Ablaufdiagramm des erfindungsgemäßen Verfahrens zum Steuern von Rückhalteeinrichtungen eines Kraftfahrzeugs.

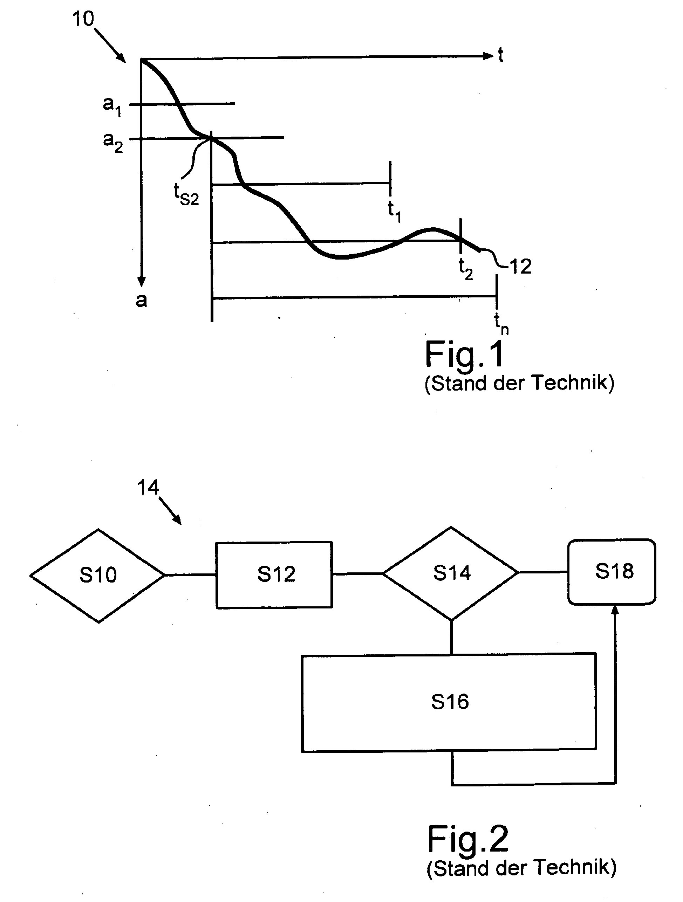

Fig. 1 zeigt in einem Diagramm 10 den zeitlichen Verlauf einer Bewegungsgröße a eines Kraftfahrzeugs gemäß dem Stand der Technik. Die Kurve 12 zeigt hierbei den Verlauf der Bewegungsgröße a in Abhängigkeit von der Zeit t. Die Bewegungsgröße a kann beispielsweise die Geschwindigkeit, die Beschleunigung oder die Längs- oder Querbeschleunigung des Kraftfahrzeugs sein. Bevorzugt beschreibt die Bewegungsgröße a den Geschwindigkeitsabbau des Kraftfahrzeugs. Sie ist also ein Maß für die Schwere des Unfalls.

Überschreitet die Bewegungsgröße a einen ersten vorgegebenen Schwellwert a₁, so wird die erste Rückhalteeinrichtung ausgelöst. Die erste Rückhalteeinrichtung des Kraftfahrzeugs kann beispielsweise ein Gurtstraffer sein. Überschreitet die Bewegungsgröße a des Kraftfahrzeugs einen zweiten vorgegebenen Schwellwert a₂, wird eine zweite Rückhalteeinrichtung des Kraftfahrzeugs ausgelöst. Die zweite Rückhalteeinrichtung des Kraftfahrzeugs kann beispielsweise ein Airbag, insbesondere ein Frontairbag sein. Die Auslösung des Airbags folgt gemäß dem Stand der Technik in Abhängigkeit von dem Überschreiten des Schwellwerts a₂, der einen höheren Wert aufweist als der Schwellwert a₁. Somit erfolgt das Auslösen des Gurtstraffers immer vor dem Auslösen des Airbags.

Mit dem Erreichen des Schwellwerts a₂ wird gleichzeitig der Zeitpunkt tₛ₂ festgelegt, zu dem die jeweiligen Timer gestartet werden, nach deren Ablauf die Einrichtungen zum Beeinflussen der jeweiligen Rückhaltekraft ausgelöst werden. So wird z. B. nach Ablauf eines ersten Timers zum Zeitpunkt t₁ ein schaltbarer Gurtkraftbegrenzer angesteuert. Nach Ablauf eines zweiten Timers wird beispielsweise zum Zeitpunkt t₂ ein adaptives Airbagvent angesteuert. Ebenso können nach Ablauf eines weiteren Timers zum Zeitpunkt tₙ weitere Einrichtungen ausgelöst werden, welche die Rückhaltekraft der jeweiligen Rückhalteeinrichtung beeinflussen.

Fig. 2 zeigt ein Ablaufdiagramm eines Verfahrens zum Steuern von Rückhalteeinrichtungen eines Kraftfahrzeugs gemäß dem Stand der Technik. Dabei wird zunächst in einem Schritt S10 überprüft, ob ein erster vorgegebener Schwellwert a₁ für die erfasste Bewegungsgröße a überschritten ist. Ist der vorgegebene Schwellwert a₁ überschritten, erfolgt in einem Schritt S12 das Auslösen der ersten Rückhalteeinrichtung des Kraftfahrzeugs, beispielsweise des pyrotechnischen Gurtstraffers. In einem weiteren Schritt S14 wird nun überprüft, ob ein zweiter vorgegebener Schwellwert a₂ für die Bewegungsgröße a des Kraftfahrzeugs überschritten ist. Ist der Schwellwert a₂ nicht überschritten, so wird das Verfahren im Schritt S18 abgebrochen. Ist der Schwellwert a₂ allerdings überschritten, so erfolgt in einem Schritt S16 das Auslösen der zweiten Rückhalteeinrichtung, beispielsweise des Airbags. Zudem werden in Schritt S16 die verschiedenen Timer gestartet, die das Auslösen des Gurtkraftbegrenzer und des Airbagvents steuern.

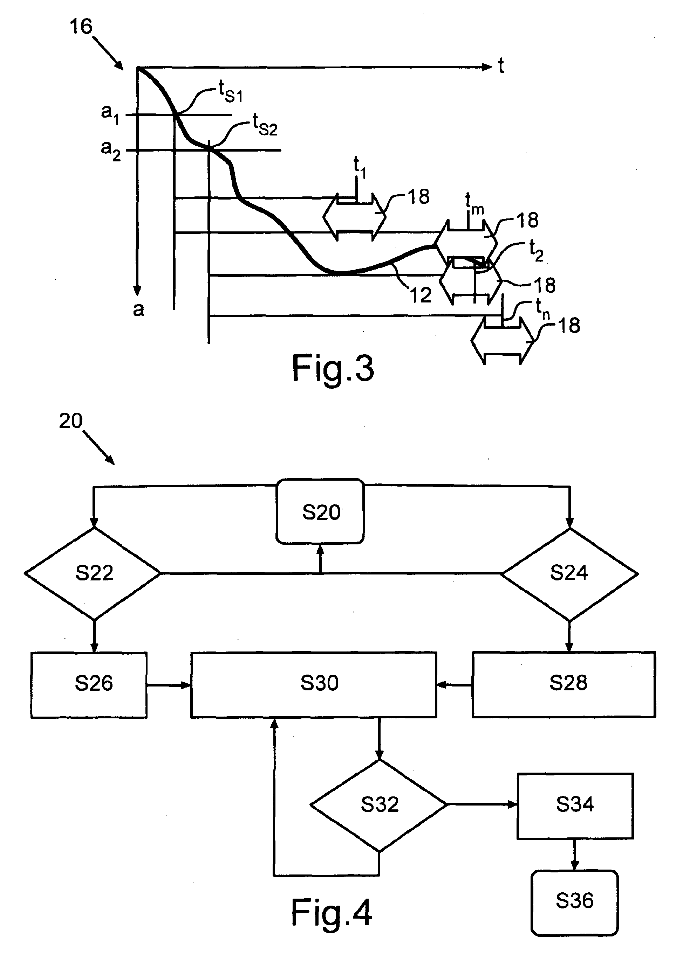

Fig. 3 zeigt in einem weiteren Diagramm 16 den zeitlichen Verlauf der Bewegungsgröße a in Abhängigkeit von der Zeit t. Hierbei ist die Auslösung der Rückhalteeinrichtungen und das Ansteuern der Einrichtungen, welche die Rückhaltekraft der jeweiligen Rückhalteeinrichtungen beeinflussen, gemäß dem erfindungsgemäßen Verfahren dargestellt. Hierbei wird ebenso nach Erreichen eines ersten Schwellwerts a₁ eine erste Rückhalteeinrichtung ausgelöst. Ebenso wird nach Erreichen eines zweiten Schwellwerts a₂ eine zweite Rückhalteeinrichtung ausgelöst. Hierbei ist das Auslösen der ersten und der zweiten Rückhalteeinrichtung nicht durch eine festgelegte Reihenfolge vorgegeben. Das Auslösen der Rückhalteeinrichtungen kann wahlweise in Abhängigkeit vom dem Überschreiten des ersten Schwellwerts a₁ oder des zweiten Schwellwerts a₂ erfolgen.

Bei dem erfindungsgemäßen Verfahren wird ebenfalls durch das Überschreiten des zweiten Schwellwerts a₂ ein Zeitpunkt tₛ₂ festgelegt. Zudem wird hier nach Erreichen des ersten Schwellwerts a₁ ein weiterer Zeitpunkt tₛ₁ festgelegt. Entsprechende Zeitwerte für die Timer, nach deren Ablauf die Einrichtungen ausgelöst werden, werden hierbei nicht nur in Abhängigkeit von dem Erreichen des Zeitpunkts tₛ₂ bzw. des Schwellwerts a₂ sondern auch von dem Erreichen des Zeitpunkts tₛ₁ bzw. des Schwellwerts a₁ bestimmt. So wird beispielsweise ein erster Timer zum Zeitpunkt tₛ₁ gestartet, wobei nach Ablaufen des Timers zum Zeitpunkt t₁ der Gurtkraftbegrenzer ausgelöst wird. Ebenso ist es denkbar, dass ein mehrere weitere Timer zum Zeitpunkt tₛ₁ ausgelöst werden, welche beispielsweise zum Zeitpunkt tₘ ablaufen und eine entsprechende Einrichtung auslösen, die den Gurtstraffer oder eine andere Rückhalteeinrichtung beeinflussen.

Die Zeitpunkte t₁, t₂, tₘ und tₙ der jeweiligen Timer werden nun in Abhängigkeit von der Schwere des Unfalls entsprechend angepasst. Dies kann anhand des zeitlichen Verlaufs der Bewegungsgröße a erfolgen. Alternativ kann ein weiterer vorgegebener Schwellwert für die Bewegungsgröße a bestimmt werden, und wobei die Zeitpunkte t₁, t₂, tₘ und tₙ in Abhängigkeit von diesem korrigiert werden. Die Zeitpunkte t₁, t₂, tₘ und tₙ können nun in Abhängigkeit von der Schwere des Unfalls und in Abhängigkeit von dem zeitlichen Verlauf des Unfalls entsprechend angepasst bzw. korrigiert werden. Dies ist in Fig. 3 durch die Pfeile 18 dargestellt.

Fig. 4 zeigt ein schematisches Ablaufdiagramm 20 des erfindungsgemäßen Verfahrens zum Steuern von Rückhalteeinrichtungen eines Kraftfahrzeugs. Hierbei wird zunächst in einem Schritt S20 das Verfahren gestartet, indem eine Bewegungsgröße a des Kraftfahrzeugs erfasst wird. Im Anschluss wird in einem Schritt S22 überprüft, ob ein erster vorgegebener Schwellwert a₁ für die Bewegungsgröße a überschritten ist. Parallel dazu wird in einem Schritt S24 überprüft, ob ein zweiter vorgegebener Schwellwert a₂ für die Bewegungsgröße a überschritten ist.

Falls der Schritt S22 das Ergebnis liefert, dass der erste vorgegebene Schwellwert a₁ nicht überschritten ist, wird das Verfahren im Schritt S20 fortgeführt, indem es neu gestartet wird. Wird allerdings im Schritt S22 festgestellt, dass der erste vorgegebene Schwellwert a₁ überschritten ist, wird in einem Schritt S26 die erste Rückhalteeinrichtung, beispielsweise der pyrotechnische Gurtstraffer ausgelöst. Ebenso wird im Schritt S26 der Timer gestartet, der das Auslösen des Gurtkraftbegrenzers bewirkt.

Wird in dem Schritt S24 festgestellt, dass der zweite vorgegebene Schwellwert a₂ der Bewegungsgröße a nicht überschritten ist, so wird das Verfahren im Schritt S20 fortgeführt, indem es neu gestartet wird. Falls im Schritt S24 allerdings festgestellt wird, dass der zweite vorgegebene Schwellwert a₂ überschritten ist, so erfolgt in einem Schritt S28 das Auslösen des Airbags. Zudem wird der Timer gestartet, der das Auslösen des adaptiven Airbagvents bewirkt.

In einem Schritt S30 wird nun der weitere Verlauf der Schwere des Unfalls überprüft und die entsprechenden Werte für die Zeitpunkte t₁, t₂, tₘ und tₙ, nach denen die jeweiligen Einrichtungen ausgelöst werden, anhand von dem zeitlichen Verlauf und/oder der Schwere des Unfalls angepasst bzw. korrigiert. Anschließend wird in einem Schritt S32 überprüft, ob zu den jeweiligen Zeitpunkten t₁, t₂, tₘ oder tₙ die dazugehörigen Werte für die Timer erreicht sind. Trifft dies nicht zu, so wird das Verfahren mit dem Schritt S30 fortgeführt. Wird allerdings im Schritt S32 festgestellt, dass zu den Zeitpunkten t₁, t₂, tₘ oder tₙ die jeweiligen Werte für die Timer erreicht sind, erfolgt in einem Schritt S34 das Auslösen der jeweiligen Einrichtung, welche die Rückhaltekraft der jeweiligen Rückhalteeinrichtung beeinflusst. Schließlich wird das Verfahren im Schritt S36 beendet.

Mit dem erfindungsgemäßen Verfahren kann das Auslösen von Rückhalteeinrichtungen und den dazugehörigen Einrichtungen in Kraftfahrzeugen sicherer erfolgen und somit der Schutz der Fahrzeuginsassen deutlich verbessert werden.

## Patentansprüche

1. Verfahren zum Steuern von Rückhalteeinrichtungen eines Kraftfahrzeugs durch
- Erfassen einer Bewegungsgröße (a) des Kraftfahrzeugs (S20),
- Auslösen einer ersten Rückhalteeinrichtung wahlweise in Abhängigkeit von dem Überschreiten eines ersten vorgegebenen Schwellwerts (a₁) oder eines zweiten vorgegebenen Schwellwerts (a₂) für die erfasste Bewegungsgröße (a) (S22),
- Auslösen einer zweiten Rückhalteeinrichtung wahlweise in Abhängigkeit von dem Überschreiten des ersten vorgegebenen Schwellwerts (a₁) oder des zweiten vorgegebenen Schwellwerts (a₂) für die erfasste Bewegungsgröße (a) (S24), und
- Ansteuern von einer die Rückhaltekraft der ersten Rückhalteeinrichtung beeinflussenden ersten Einrichtung und einer die Rückhaltekraft der zweiten Rückhalteeinrichtung beeinflussenden zweiten Einrichtung in Abhängigkeit von dem Überschreiten des ersten vorgegebenen Schwellwerts (a₁) und/oder des zweiten vorgegebenen Schwellwerts (a₂) (S22, S24),
**dadurch gekennzeichnet, dass**
- das Auslösen der Rückhalteeinrichtungen nicht durch eine festgelegte Reihenfolge vorgegeben wird, sondern an den Verlauf des Unfalls bzw. an die Schwere des Unfalls angepasst wird.

2. Verfahren nach Anspruch 1,
**dadurch gekennzeichnet, dass**
das Ansteuern der ersten und/oder zweiten Einrichtung in Abhängigkeit einer zeitlichen Dauer erfolgt, wobei die zeitliche Dauer anhand eines zeitlichen Verlauf der Bewegungsgröße (a) bestimmt wird.

3. Verfahren nach Anspruch 1,
**dadurch gekennzeichnet, dass**
das Ansteuern der ersten und/oder zweiten Einrichtung in Abhängigkeit einer zeitlichen Dauer erfolgt, wobei die zeitliche Dauer in Abhängigkeit von dem Überschreiten eines weiteren vorgegebenen Schwellwerts für die Bewegungsgröße bestimmt wird.

4. Verfahren nach einem der vorhergehenden Ansprüche,
**dadurch gekennzeichnet, dass**
das Auslösen der zweiten Rückhalteeinrichtung unabhängig von dem Auslösen der ersten Rückhalteeinrichtung erfolgt.

5. Rückhaltesystem für ein Kraftfahrzeug mit
- zumindest einem Crashsensor zum Erfassen einer Bewegungsgröße des Kraftfahrzeugs,
- einer ersten Rückhalteeinrichtung,
- einer zweiten Rückhalteeinrichtung,
- einer ersten Einrichtung, mit der eine Rückhaltekraft der ersten Rückhalteeinrichtung beeinflussbar ist,
- einer zweiten Einrichtung, mit der eine Rückhaltekraft der zweiten Rückhalteeinrichtung beeinflussbar ist, und
- einem Steuergerät zum Auslösen der ersten Rückhalteeinrichtung wahlweise in Abhängigkeit von dem Überschreiten eines ersten vorgegebenen Schwellwerts (a₁) oder eines zweiten vorgegebenen Schwellwerts (a₂) für die erfasste Bewegungsgröße (a), zum Auslösen einer zweiten Rückhalteeinrichtung wahlweise in Abhängigkeit von dem Überschreiten des ersten vorgegebenen Schwellwerts (a₁) oder des zweiten vorgegebenen Schwellwerts (a₂) für die erfasste Bewegungsgröße (a), und zum Ansteuern von der ersten und zweiten Einrichtung in Abhängigkeit von dem Überschreiten des ersten vorgegebenen Schwellwerts (a₁) und/oder des zweiten vorgegebenen Schwellwerts (a₂),
**dadurch gekennzeichnet, dass**
- das Auslösen der Rückhalteeinrichtungen nicht durch eine festgelegte Reihenfolge vorgegeben wird, sondern an den Verlauf des Unfalls bzw. an die Schwere des Unfalls angepasst wird.

6. Rückhaltesystem nach Anspruch 5,
**dadurch gekennzeichnet, dass**
das Ansteuern der ersten und/oder zweiten Einrichtung in Abhängigkeit einer zeitlichen Dauer erfolgt, und die zeitliche Dauer anhand eines zeitlichen Verlaufs der Bewegungsgröße (a) bestimmbar ist.

7. Rückhaltesystem nach Anspruch 5,
**dadurch gekennzeichnet, dass**
das Ansteuern der ersten und/oder zweiten Einrichtung in Abhängigkeit einer zeitlichen Dauer erfolgt, und die zeitliche Dauer in Abhängigkeit von dem Überschreiten eines weiteren vorgegebenen Schwellwerts für die Bewegungsgröße (a) bestimmbar ist.

8. Rückhaltesystem nach einem der Ansprüche 5-7,
**dadurch gekennzeichnet, dass**
die erste Rückhalteinrichtung einen Gurtstraffer und die zweite Rückhalteeinrichtung einen Airbag umfasst.

9. Rückhaltesystem nach einem der Ansprüche 5-8,
**dadurch gekennzeichnet, dass**
die erste Einrichtung einen Gurtkraftbegrenzer und eine zweite Einrichtung eine steuerbare Auslassöffnung des Airbags umfasst.

10. Kraftfahrzeug
mit einem Rückhaltesystem nach einem der Ansprüche 5 bis 9.

## Claims

1. Method for controlling restraint devices in a motor vehicle by
- detecting a movement parameter (a) of the motor vehicle (S20),
- triggering a first restraint device optionally in response to exceeding a first predetermined threshold value (a₁) or a second predetermined threshold value (a₂) for the detected movement parameter (a) (S22),
- triggering a second restraint device optionally in response to exceeding the first predetermined threshold value (a₁) or the second predetermined threshold value (a₂) for the detected movement parameter (a) (S24), and
- actuating a first device which influences the restraining force of the first restraint device and a second device which influences the restraining force of the second restraint device in response to exceeding the first predetermined threshold value (a₁) and/or the second predetermined threshold value (a₂) (S22, S24),
**characterised in that**
- triggering the restraint devices is not predetermined by a set sequence, but is adapted to the course of the accident or to the severity of the accident.

2. Method according to claim 1, **characterised in that** the first and/or second device is actuated on the basis of a duration of time, the duration of time being determined depending on a temporal course of the movement parameter (a).

3. Method according to claim 1, **characterised in that** the first and/or second device is actuated on the basis of a duration of time, the duration of time being determined in response to exceeding a further predetermined threshold value for the movement parameter.

4. Method according to any of the preceding claims, **characterised in that** the second restraint device is triggered independently of the first restraint device being triggered.

5. Restraint system for a motor vehicle, comprising:
- at least one crash sensor for detecting a movement parameter of the motor vehicle,
- a first restraint device,
- a second restraint device,
- a first device for influencing a restraining force of the first restraint device,
- a second device for influencing a restraining force of the second restraint device, and
- a control apparatus for triggering the first restraint device optionally in response to exceeding a first predetermined threshold value (a₁) or a second predetermined threshold value (a₂) for the detected movement parameter (a), for triggering a second restraint device optionally in response to exceeding the first predetermined threshold value (a₁) or the second predetermined threshold value (a₂) for the detected movement parameter (a), and for actuating the first and second device in response to exceeding the first predetermined threshold value (a₁) and/or the second predetermined threshold value (a₂),
**characterised in that**
- triggering the restraint devices is not predetermined by a set sequence, but is adapted to the course of the accident or to the severity of the accident.

6. Restraint system according to claim 5, **characterised in that** the first and/or second device is actuated on the basis of a duration of time, and the duration of time can be determined depending on a temporal course of the movement parameter (a).

7. Restraint system according to claim 5, **characterised in that** the first and/or second device is actuated on the basis of a duration of time, and the duration of time can be determined in response to exceeding a further predetermined threshold value for the movement parameter (a).

8. Restraint system according to any of claims 5 to 7, **characterised in that** the first restraint device includes a seatbelt tensioner and the second restraint device includes an airbag.

9. Restraint system according to any of claims 5 to 8, **characterised in that** the first device includes a seatbelt force limiter and a second device includes a controllable outlet opening for the airbag.

10. Motor vehicle comprising a restraint system according to any of claims 5 to 9.

## Revendications

1. Procédé de commande de dispositifs de retenue d'un véhicule automobile par les étapes consistant à :
- acquérir une quantité de mouvement (a) du véhicule automobile (S20),
- déclencher un premier dispositif de retenue au choix en fonction du dépassement d'une première valeur de seuil prédéterminée (a₁) ou d'une seconde valeur de seuil prédéterminée (a₂) pour la quantité de mouvement acquise (a) (S22),
- déclencher un second dispositif de retenue au choix en fonction du dépassement d'une première valeur de seuil prédéterminée (a₁) ou d'une seconde valeur de seuil prédéterminée (a₂) pour la quantité de mouvement acquise (a) (S24),
- commander un premier dispositif influençant la force de retenue du premier dispositif de retenue et un second dispositif influençant la force de retenue du second dispositif de retenue en fonction du dépassement de la première valeur de seuil prédéterminée (a₁) et/ou de la seconde valeur de seuil prédéterminée (a₂) (S22, S24),
**caractérisé en ce que** :
- le déclenchement des dispositifs de retenue n'est pas prédéterminé par une séquence établie, mais s'adapte au déroulement de l'accident ou à la gravité de l'accident.

2. Procédé selon la revendication 1,
**caractérisé en ce que** :
la commande du premier et/ou du second dispositif se fait en fonction d'un intervalle de temps, dans lequel l'intervalle de temps est déterminé sur la base de l'évolution dans le temps de la quantité de mouvement (a).

3. Procédé selon la revendication 1,
**caractérisé en ce que** :
la commande du premier et/ou du second dispositif se fait en fonction d'un intervalle de temps, dans lequel l'intervalle de temps est déterminé en fonction du dépassement d'une autre valeur de seuil prédéterminée pour la quantité de mouvement.

4. Procédé selon l'une quelconque des revendications précédentes,
**caractérisé en ce que** :
le déclanchement du second dispositif de retenue se fait indépendamment du déclenchement du premier dispositif de retenue.

5. Système de retenue pour un véhicule automobile, comprenant :
- au moins un capteur de collision pour acquérir une quantité de mouvement du véhicule automobile,
- un premier dispositif de retenue,
- un second dispositif de retenue,
- un premier dispositif avec lequel une force de retenue du premier dispositif de retenue peut être influencée,
- un second dispositif avec lequel une force de retenue du second dispositif de retenue peut être influencée, et
- un appareil de commande pour déclencher le premier dispositif de retenue au choix en fonction du dépassement d'une première valeur de seuil prédéterminée (a₁) ou d'une seconde valeur de seuil prédéterminée (a₂) pour la quantité de mouvement acquise (a), pour déclencher un second dispositif de retenue au choix en fonction du dépassement de la première valeur de seuil prédéterminée (a₁) ou de la seconde valeur de seuil prédéterminée (a₂) pour la quantité de mouvement acquise (a) et pour commander le premier et le second dispositif en fonction du dépassement de la première valeur de seuil prédéterminée (a₁) et/ou de la seconde valeur de seuil prédéterminée (a₂),
**caractérisé en ce que** :
- le déclenchement des dispositifs de retenue n'est pas prédéterminé par une séquence établie, mais s'adapte au déroulement de l'accident ou à la gravité de l'accident.

6. Système de retenue selon la revendication 5, **caractérisé en ce que** :
la commande du premier et/ou du second dispositif se fait en fonction d'un intervalle de temps et l'intervalle de temps peut être déterminé sur la base de l'évolution dans le temps de la quantité de mouvement (a).

7. Système de retenue selon la revendication 5, **caractérisé en ce que** :
la commande du premier et/ou du second dispositif se fait en fonction d'un intervalle de temps et l'intervalle de temps peut être déterminé en fonction du dépassement d'une autre valeur de seuil prédéterminée pour la quantité de mouvement (a).

8. Système de retenue selon l'une quelconque des revendications 5 à 7,
**caractérisé en ce que** :
le premier dispositif de retenue comprend un tendeur de ceinture de sécurité et le second dispositif de retenue un airbag.

9. Système de retenue selon l'une quelconque des revendications 5 à 8,
**caractérisé en ce que** :
le premier dispositif comprend un limiteur de force de ceinture de sécurité et un second dispositif comprend une ouverture d'éjection réglable de l'airbag.

10. Véhicule automobile
comprenant un système de retenue selon l'une quelconque des revendications 5 à 9.
